# EUROPEAN PATENT SPECIFICATION

(11) **EP 3 220 271 B1**
(45) Date of publication and mention of the grant of the patent: **30.01.2019**
(21) Application number: 15869748.2
(22) Date of filing: 25.11.2015
(51) Int. Cl.: G06F 11/07, G06F 11/30, G06F 11/34, F24F 11/30, F24F 11/89

(54) **DATA COLLECTION DEVICE, DATA COLLECTION SYSTEM, CONTROL METHOD, AND PROGRAM**
DATENERFASSUNGSVORRICHTUNG, DATENERFASSUNGSSYSTEM, STEUERUNGSVERFAHREN UND PROGRAMM
DISPOSITIF DE COLLECTE DE DONNÉES, SYSTÈME DE COLLECTE DE DONNÉES, PROCÉDÉ DE COMMANDE ET PROGRAMME

(30) Priority: 18.12.2014 JP 2014256037
(43) Date of publication of application: 20.09.2017
(73) Proprietor: Mitsubishi Heavy Industries Thermal Systems, Ltd., Tokyo 108-8215 (JP)
(72) Inventor: KAMBE Taiga, Tokyo 108-8215 (JP); INABA Takashi, Tokyo 108-8215 (JP); MORIKAWA Junji, Tokyo 108-8215 (JP)
(74) Representative: Intès, Didier Gérard André
(86) International application number: PCT/JP2015/083021
(87) International publication number: WO 2016/098540

(56) References cited:
- EP-A1- 2 650 619
- EP-A2- 2 351 971
- WO-A1-2009/057682
- WO-A1-2014/115316
- JP-A- H0 771 803
- JP-A- S6 191 736
- JP-A- H08 212 112
- JP-A- 2000 163 122
- JP-A- 2012 243 269

## Description

### Technical Field

The present invention relates to a data collection device of an air conditioner, a data collection system, a control method, and a program.

Priority is claimed on Japanese Patent Application No. 2014-256037, filed on December 18, 2014.

### Background Art

The logging of internal log data of an air conditioner and the utilization of the data for service have been generally performed. For example, a maintenance worker connects a data logger for an air conditioner to the air conditioner, and makes the internal log data of the air conditioner written in a storage unit included in the data logger. The maintenance worker connects a PC to the data logger, transmits the internal log data accumulated in the storage unit of the data logger to the PC, and analyzes the internal log data to thereby utilize the presence or absence and cause of an abnormality for an examination.

In addition, PTL 1 as the related art discloses a general-purpose data logger that instructs a PC connected to the device to execute a specific program, which is suitable for a preset specific condition, when receiving a signal satisfying the condition. WO 2014/115316 A1 discloses an air-conditioning system including a general-purpose device controller. It also discloses the features of a data collection device comprising: a data reception unit that is connected to an air conditioner and acquires internal log data in a binary format from a controller of the air; an output determination unit that compares a condition value which is set in a binary format in advance with the acquired internal log data to thereby determine whether or not an output condition is satisfied.

EP 2 351 971 A2 discloses an air-conditioning monitoring system. WO 2009/057862 A1 discloses an adapter configured to collect device data from an air conditioner.

### Citation List

### Patent Literature

[PTL1] Japanese Unexamined Patent Application, First Publication No. H11-296556

### Summary of Invention

### Technical Problem

However, there is a problem in that the data logger for an air conditioner of the related art cannot report the detection of an abnormality in real time even when the internal log data acquired from the air conditioner includes an abnormal value. Although the data logger disclosed in PTL 1 can report an abnormal value in real time, it is premised that the data logger is connected to a PC at all times. Accordingly, it is difficult to use the data logger as a data logger for an air conditioner.

The present invention provides a data collection device, a data collection system, a control method, and a program which are capable of solving the above-described problem.

### Solution to Problem

According to a first aspect of the present invention, there is provided a data collection device including a data reception unit that is connected to an air conditioner and acquires internal log data in a binary format from a controller of the air conditioner, an output determination unit that compares a condition value which is set in a binary format in advance with the acquired internal log data to thereby determine whether or not an output condition is satisfied, and an external output unit that outputs a notification signal indicating that an abnormality has been detected in a case where the output determination unit determines that the output condition is satisfied.

According to a second aspect of the present invention, the output determination unit may extract data corresponding to a parameter to be monitored from the internal log data acquired by the data reception unit, on the basis of a correspondence relationship between a data position in the internal log data which is determined in advance and a kind of parameter allocated to data at the position, and may compare the extracted data with the condition value.

According to a third aspect of the present invention, there is provided a data collection system including the above-described data collection device, and a data analysis device that is detachably connected to the data collection device, in which the data collection device further includes a storage unit that stores the internal log data acquired by the data reception unit, and in which the data analysis device includes a log data acquisition unit that acquires the internal log data written in the storage unit of the data collection device, and a conversion unit that converts the internal log data acquired by the log data acquisition unit into text data.

According to a fourth aspect of the present invention, the data analysis device may further include a setting reception unit that receives an input of the output condition, and a data conversion unit that converts a condition value included in the output condition into a binary format, and outputs the output condition to the data collection device, and the data collection device may further include an output condition setting unit that acquires the output condition which is output by the data conversion unit and writes the acquired output condition in the storage unit.

According to a fifth aspect of the present invention, there is provided a control method including causing a data collection device connected to an air conditioner to acquire internal log data in a binary format from a controller of the air conditioner, to compare a condition value which is set in a binary format in advance with the acquired internal log data to thereby determine whether or not an output condition is satisfied, and to output a notification signal indicating that an abnormality has been detected in a case where it is determined that the output condition is satisfied.

According to a sixth aspect of the present invention, there is provided a program causing a computer of a data collection device to function as means, which is connected to an air conditioner, for acquiring internal log data in a binary format from a controller of the air conditioner, means for comparing a condition value which is set in a binary format in advance with the acquired internal log data to thereby determine whether or not an output condition is satisfied, and means for outputting a notification signal indicating that an abnormality has been detected in a case where the output condition is satisfied. Advantageous Effects of Invention

According to the above-described data collection device, data collection system, control method, and program, it is possible to detect an abnormality inside an air conditioner in real time.

### Brief Description of Drawings

FIG. 1 is a schematic diagram illustrating an example of a data collection device connected to an air conditioner according to an embodiment of the present invention.
FIG. 2 is a schematic functional block diagram illustrating an example of the data collection device according to the embodiment of the present invention.
FIG. 3 is a diagram illustrating an example of internal log data according to the embodiment of the present invention.
FIG. 4A is a first diagram illustrating an example of output conditions according to the embodiment of the present invention.
FIG. 4B is a second diagram illustrating an example of output conditions according to the embodiment of the present invention.
FIG. 4C is a third diagram illustrating an example of output conditions according to the embodiment of the present invention.
FIG. 4D is a fourth diagram illustrating an example of output conditions according to the embodiment of the present invention.
FIG. 5 is a diagram illustrating an example of a processing flow of the data collection device according to the embodiment of the present invention.
FIG. 6 is a schematic functional block diagram illustrating an example of a data analysis device according to the embodiment of the present invention.
FIG. 7 is a first diagram illustrating an example of a processing flow of the data analysis device according to the embodiment of the present invention.
FIG. 8 is a second diagram illustrating an example of a processing flow of the data analysis device according to the embodiment of the present invention. Description of Embodiments

### First Embodiment

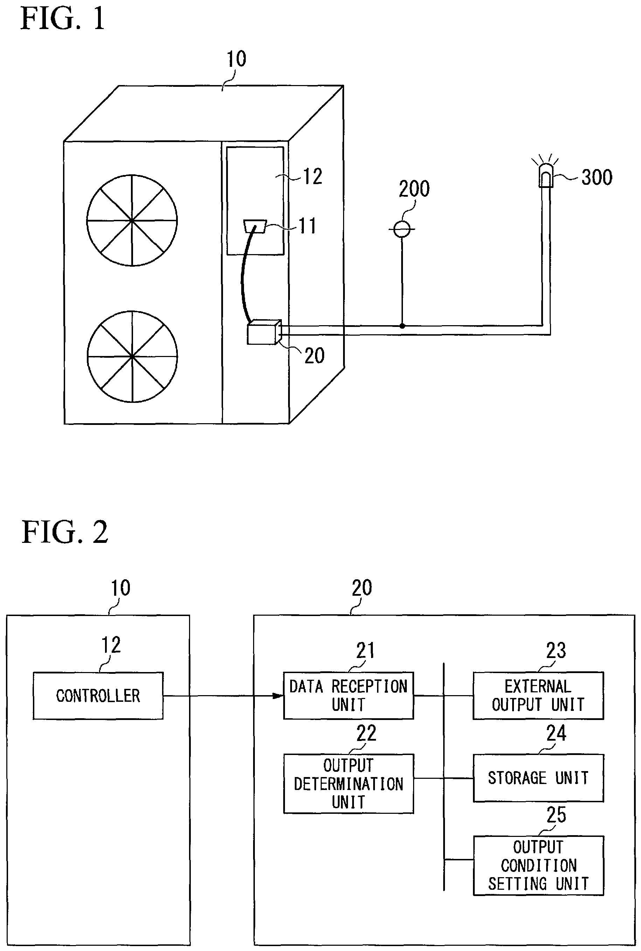

Hereinafter, a data collection device according to an embodiment of the present invention will be described with reference to FIGS. 1 to 8.

FIG. 1 is a schematic diagram illustrating an example of a data collection device connected to an air conditioner according to an embodiment of the present invention.

In FIG. 1, an air conditioner (outdoor unit) 10 is provided with a controller 12. The controller 12 collects internal log data of the air conditioner 10 and controls the air conditioner. The internal log data refers to data indicating the internal state of the air conditioner 10 which is necessary for the control and monitoring of the air conditioner 10. The internal log data refers to detection information such as outside air temperature, the pressure of a refrigerant gas, the temperature of a compressor or a heat exchanger, the number of motor revolutions, and the like. The air conditioner 10 is provided with an external interface 11 capable of performing data communication with an external device. The internal log data collected by the controller 12 can be output to the external device through the external interface 11. The external interface 11 is based on, for example, RS232-C. The external interface 11 is generally included in the air conditioner 10, and is used to be connected to a monitoring system, a PC, a data logger, and the like. In this embodiment, the data collection device 20 is connected to the external interface 11, collects internal log data of the air conditioner 10, and monitors an abnormality of the air conditioner 10.

The data collection device 20, which is connected to the air conditioner 10, is a device for collecting the internal log data of the air conditioner 10, monitoring an abnormality, and the like. The data collection device 20 is operated to an external power supply, not shown in the drawing, which is separate from the air conditioner 10. The data collection device 20 is a device which is detachable from and independent of the air conditioner 10. The data collection device 20 includes an external interface based on, for example, RS232-C as an input port. The data collection device 20 acquires internal log data from the controller 12 of the air conditioner 10 through the input port. The data collection device 20 determines the acquired internal log data on the basis of a preset output determination condition for a notification signal during the detection of an abnormality. The data collection device 20 outputs a notification signal indicating that an abnormality has been detected in a case where the internal log data satisfies the output conditions. The data collection device 20 includes an output port such as an external contact output terminal, and output an on signal when the internal log data satisfies the output conditions. For example, the output port and an external alarm device 300, for example, an alarm lamp are connected to each other, and thus the data collection device 20 can turn on the external alarm device 300 when detecting an abnormality and can notify a maintenance worker or the like of the abnormality in real time. The external alarm device 300 operates, for example, an external power supply 200, which is separate from the air conditioner 10, as a power supply.

The data collection device 20 can store the internal log data acquired from the controller 12 in a storage unit. The data collection device 20 includes an output port such as a local area network (LAN). When the data collection device 20 and a PC (data analysis device 30 to be described later) are connected to each other through the LAN, the maintenance worker can confirm a log of the internal log data stored by the data collection device 20 by using the PC.

Since the occurrence of an abnormality can be confirmed in real time by an alarm of the external alarm device 300, the maintenance worker can rapidly cope with maintenance service. Since the PC is not necessary for the ascertainment of occurrence of an abnormality, convenience is improved. The PC is connected to the data collection device 20 at the time of the occurrence of an abnormality so that it is possible to confirm the internal log data before and after the occurrence of the abnormality which is stored in the data collection device 20, and thus it is possible to examine a cause of the occurrence of the abnormality.

FIG. 2 is a schematic functional block diagram illustrating an example of the data collection device according to the embodiment of the present invention.

The data collection device 20 is, for example, a microcomputer, and includes at least a data reception unit 21, an output determination unit 22, an external output unit 23, a storage unit 24, and an output condition setting unit 25 as illustrated in FIG. 2. The data collection device 20 is communicably connected to the controller 12 of the air conditioner 10.

The data reception unit 21 acquires internal log data of the air conditioner 10 from the controller 12. The internal log data is given as data in a binary format.

The output determination unit 22 compares a condition value which is set in a binary format in advance and the acquired internal log data in a binary format with each other to determine whether or not an output condition of a notification signal for giving notice of the detection of an abnormality is satisfied.

The external output unit 23 outputs the notification signal for giving notice of the detection of an abnormality in a case where the output determination unit 22 determines that the output condition is satisfied.

The storage unit 24 stores the internal log data in a binary format which is acquired by the data reception unit 21, the condition value used for the determination of output, and the like. The storage unit 24 is, for example, a flash memory, a secure digital (SD) memory card, or the like.

The output condition setting unit 25 acquires an output condition and writes the acquired output condition in the storage unit 24.

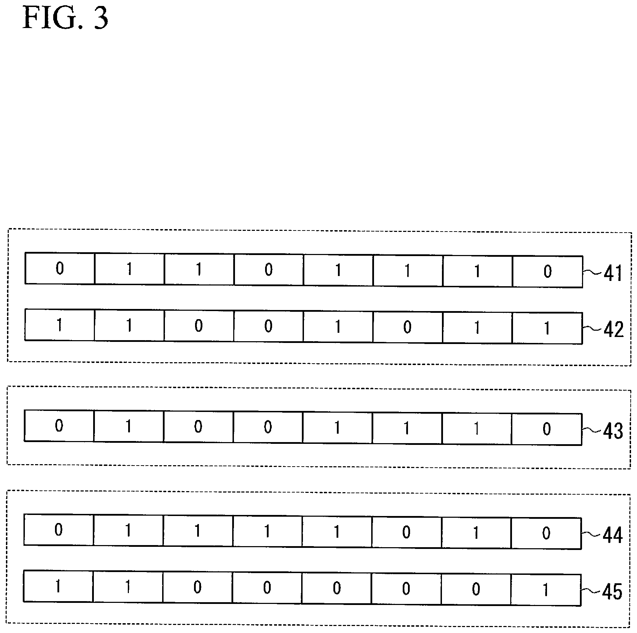

FIG. 3 is a diagram illustrating an example of internal log data according to the embodiment of the present invention.

For convenience of description, each of pieces of data 41 to 45 is written by being sectioned by each byte, but is a certain group of internal log data. The pieces of internal log data illustrated in FIG. 3 are configured so as to be arranged in order from data written on the drawing in such a manner that the data 42 follows the data 41 and the data 43 follows the data 42. As illustrated in FIG. 3, the internal log data is given as data in a binary format, and is given meaning in units of one byte.

For example, the pieces of data 41 and 42 are pieces of data allocated for an outside air temperature. For example, the data 41 is allocated to a value of the tens place of the outside air temperature, and the data 42 is allocated to a value of the ones place of the outside air temperature. In this embodiment, for example, values obtained by converting values of respective digits of 25°C into binary numbers are not allocated to the data 41 and 42 in representing outside air temperature=25°C. The value of each of the pieces of data 41 and 42 is a value converted so as to become a physical quantity (for example, 25°C) indicating an outside air temperature by converting the allocated value of the binary number into a decimal number and then dividing the converted value by 0.05.

For example, the data 43 is data allocated to represent the number of revolutions of the motor included in the air conditioner 10. In a case of the number of revolutions of the motor, the value of the data 43 is converted into a physical quantity indicating the number of revolutions of the motor by converting the binary number into a decimal number and multiplying the converted value by 20.

For example, the pieces of data 44 and 45 are pieces of data allocated in order to represent the pressure of a refrigerant gas. For example, the data 44 is allocated to a value of the tens place of the pressure, and the data 45 is allocated to a value of the ones place of the pressure. In order to convert the value of each of the pieces of data 44 and 45 into a physical quantity indicating the pressure, the value of a binary number of each of the pieces of data 44 and 45 is converted into a decimal number.

FIG. 3 illustrates an example of internal log data, but is not limited thereto. For example, the internal log data may be data configured such that a parameter of the air conditioner 10 other than the parameters illustrated here is further added. It is assumed that a data format specifying a correspondence relationship between a data position (which byte) in these internal log data and a parameter allocated to binary data at the position is determined in advance and is recorded in the storage unit 24. The output determination unit 22 acquires a data position at which data corresponding to a condition value for performing output determination is stored with reference to the correspondence relationship, and extracts data to be determined from the data position of the internal log data acquired by the data reception unit 21. Here, the output determination unit 22 performs the output determination by comparing the extracted binary data and a condition value which is set in a binary format in advance with each other without converting the extracted binary data into a physical quantity indicated by text data in accordance with the conversion rule illustrated above.

The amount of internal log data acquired from the air conditioner 10 is massive. When the output determination is performed while performing conversion into text data by calculation such as the internal log data in a binary format being converted into a decimal number and being multiplied by 0.05, it takes time to perform the conversion process, and thus there is a possibility that an output determination process is delayed. An attempt to realize real-time abnormality detection while performing the conversion process to text data requires high performance hardware for the data collection device 20, results in an increase in the size of the data collection device 20, and causes a problem such as an installation location, which leads to an increase in costs. Consequently, the data collection device 20 of this embodiment performs the processing in a state of data in a binary format without converting the data into text data.

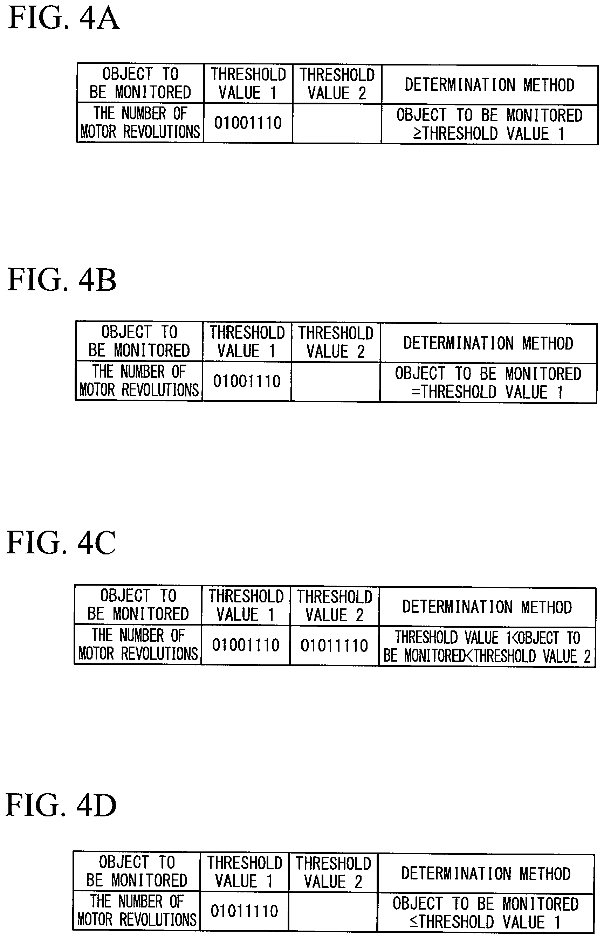

FIG. 4A is a first diagram illustrating an example of output conditions according to the embodiment of the present invention. FIG. 4B is a second diagram illustrating an example of output conditions according to the embodiment of the present invention. FIG. 4C is a third diagram illustrating an example of output conditions according to the embodiment of the present invention. FIG. 4D is a fourth diagram illustrating an example of output conditions according to the embodiment of the present invention.

As illustrated in FIGS. 4A to 4D, the output conditions include items of, for example, "object to be monitored", "threshold value 1", "threshold value 2", and "determination method". The output conditions which are set using a PC are set in the form of a table having these items stored in the storage unit 24.

In the "object to be monitored", a kind of parameter to be monitored (for example, the number of motor revolutions) is set. In the "threshold value 1" and the "threshold value 2", condition values used for determination are set. Two items for setting a condition value are provided because the items are used for the determination of a range. As described above, the condition value is stored in the storage unit 24 in a binary format. Regarding the condition value, a physical quantity represented by text data which is set by a maintenance worker or the like in a PC connected to the data collection device 20 is converted into a binary format through conversion opposite to the above-described conversion, and is stored in the storage unit 24. In the "determination method", a determination method using signs of equality and inequality is set. By the setting of theses output conditions, it is possible to perform various determination such as when the value of internal log data is set to be X, is set to be equal to or greater than X, or is in a range between a value of X1 and a value of X2.

FIG. 4A illustrates a setting example in a case where it is determined that the output conditions are satisfied when a certain object to be monitored is set to be equal to or greater than the threshold value 1. In a case of this setting, the output determination unit 22 compares a value (third byte in the internal log data illustrated in FIG. 3) of the number of motor revolutions included in internal log data with "01001110", and determines that the output conditions are satisfied when the number of motor revolutions of the internal log data≥01001110.

FIG. 4B illustrates a setting example in a case where it is determined that the output conditions are satisfied when a certain object to be monitored is set to be equal to a certain threshold value 1. In a case of this setting, the output determination unit 22 compares a value of the number of motor revolutions included in internal log data with "01001110", and determines that the output conditions are satisfied when the number of motor revolutions of the internal log data=01001110.

FIG. 4C illustrates a setting example in a case where it is determined that the output conditions are satisfied when a certain object to be monitored is set to be a value in a certain range (of the threshold value 1 to the threshold value 2). In a case of this setting, the output determination unit 22 compares a value of the number of motor revolutions included in internal log data with "01001110" and "01011110", and determines that the output conditions are satisfied when 01001110<the number of motor revolutions of the internal log data<01011110.

FIG. 4D illustrates a setting example in a case where it is determined that the output conditions are satisfied when a certain object to be monitored is set to be equal to or less than the threshold value 1. In a case of this setting, the output determination unit 22 compares a value of the number of motor revolutions included in internal log data with "01011110", and determines that the output conditions are satisfied when the number of motor revolutions of the internal log data ≤ 01011110.

In this manner, the output determination unit 22 can compare the pieces of binary data with each other by the condition values being set in the storage unit 24 in binary formats, and thus it is possible to obtain effects such as a reduction in a processing load and an increase in the speed of processing.

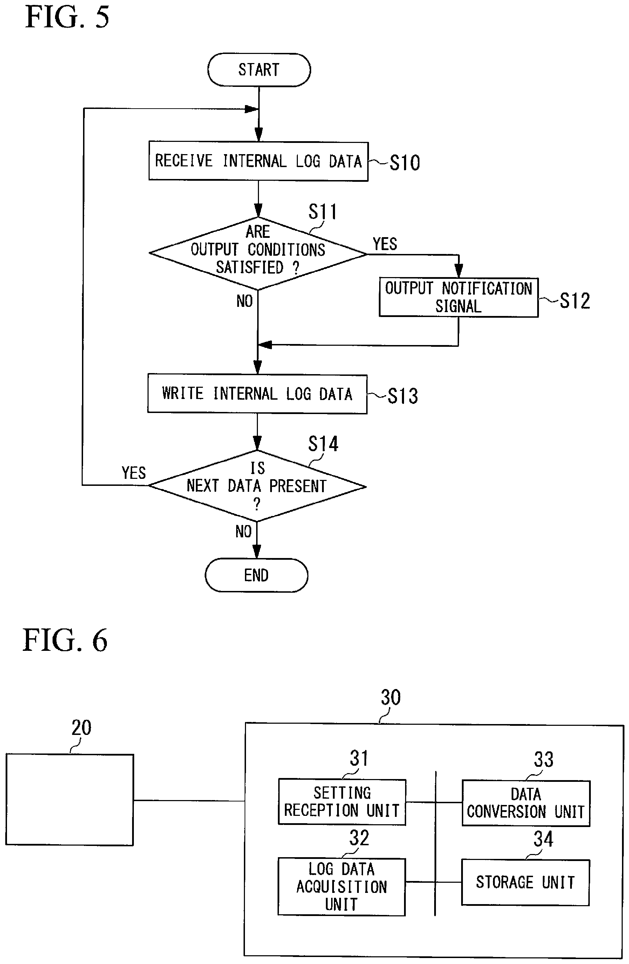

FIG. 5 is a diagram illustrating an example of a processing flow of the data collection device according to the embodiment of the present invention.

A flow of an output determination process and a logging process performed by the data collection device 20 will be described with reference to FIG. 5.

It is premised that the output condition as illustrated in FIGS. 4A to 4D are set in the storage unit 24 of the data collection device 20. It is assumed that the data collection device 20 is connected to the external interface 11 provided in the air conditioner 10 through a connector and the controller 12 outputs internal log data to the data collection device 20 through the external interface.

First, the data reception unit 21 acquires internal log data in a binary format from the controller 12 (step S10). The data reception unit 21 outputs the acquired internal log data to the output determination unit 22. Next, the output determination unit 22 reads out the output conditions from the storage unit 24. For example, the output determination unit 22 reads out "the number of motor revolutions" as a parameter to be monitored, "01001110" as a condition value (threshold value 1), and "object to be monitored ≥ threshold value 1" as a determination method. Next, the output determination unit 22 acquires a data position in the internal log data at which binary data corresponding to the parameter to be monitored ("the number of motor revolutions") is stored, with reference to a correspondence relationship between data positions in the internal log data stored in the storage unit 24 and types of parameters allocated to binary data at the positions. For example, "the number of motor revolutions" is a third byte. Next, the output determination unit 22 extracts binary data at the data position of the internal log data. For example, in a case where an object to be monitored is "the number of motor revolutions", the output determination unit 22 extracts binary data of the third byte of the internal log data.

Next, the output determination unit 22 determines whether or not the binary data extracted from the internal log data satisfies the output conditions acquired from the storage unit 24 (step S11). For example, the output determination unit 22 substitutes the value of the extracted binary data or the read-out condition value (threshold value 1) for the determination method "object to be monitored ≥ threshold value 1" to determine whether or not "the binary data of the third byte of internal log data≥01001110" is established.

In a case where the output conditions are satisfied (step S11; Yes), the output determination unit 22 outputs a signal indicating the establishment of the output conditions to the external output unit 23. The external output unit 23 having the acquired signal indicating the establishment of the output conditions outputs a notification signal to an external device through an output port (step S12). For example, in a case where the output port is an external contact output terminal, an on signal is output. In a case where an alarm lamp connected to the external contact output terminal is connected, the alarm lamp is turned on to notify a maintenance worker that internal log data satisfying the output conditions has been detected. In a case where the maintenance worker performs setting such as "determination result indicates an abnormality when the number of motor revolutions is equal to or greater than X", it is possible to know that the number of motor revolutions is equal to or greater than X.

In a case where the output conditions are not satisfied (step S11; No) or in a case where the process of step S12 has been completed, the output determination unit 22 adds information of the present time to the internal log data in a binary format which is received from the data reception unit 21 and writes the information in the storage unit 24 (step S13). Thereby, the maintenance worker having noticed the abnormality can confirm the internal log data written in the storage unit 24 and investigate the cause of the abnormality.

Next, the data reception unit 21 determines whether or not the next internal log data is output from the air conditioner 10 (step S14). In a case where received data is output (step S14; Yes), the processes from step S10 are repeated. In a case where received data is not output (step S14; No), this processing flow is terminated.

In a case where the storage capacity of the storage unit 24 is not sufficient in writing the internal log data received from the air conditioner 10 in the storage unit 24 in step S13, the process of step S14 may be performed without performing the process of step S13. When the writing cannot be performed due to the insufficient storage capacity of the storage unit 24, the output determination unit 22 determines that an abnormality has occurred, instructs the external output unit 23 to output a notification signal, and may prompt the maintenance worker to delete the internal log data written in the storage unit 24 and to replace an SD memory card.

FIG. 6 is a schematic functional block diagram illustrating an example of a data analysis device according to the embodiment of the present invention.

In FIG. 6, the data analysis device 30 is, for example, a PC. The data analysis device 30 is connected to the data collection device 20 and is used in a case where the setting of output conditions used for the output determination of the output determination unit 22 or a case where the internal log data written in the storage unit 24 is acquired and analyzed.

As illustrated in FIG. 6, the data analysis device 30 includes at least a setting reception unit 31, a log data acquisition unit 32, a data conversion unit 33, and a storage unit 34. The data analysis device 30 is communicably connected to the data collection device 20 as necessary.

The setting reception unit 31 receives a maintenance worker's operation of setting output conditions, and acquires text data including the output conditions.

The log data acquisition unit 32 acquires internal log data in a binary format which is written in the storage unit 24 of the data collection device 20.

The data conversion unit 33 converts the internal log data in a binary format which is acquired by the log data acquisition unit 32 into text data. The data conversion unit 33 converts a condition value included in the output conditions received by the setting reception unit 31 into a binary format and outputs the converted value to the data collection device 20.

The storage unit 34 stores, for example, the internal log data converted into text data by the data conversion unit 33, and the like.

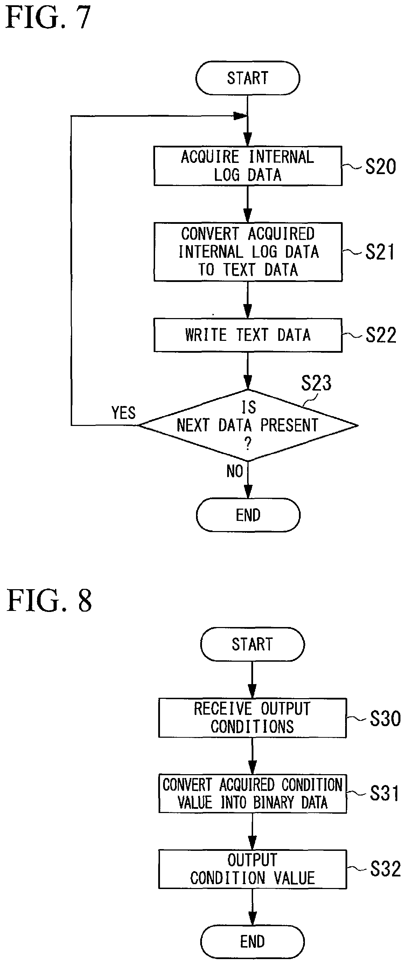

FIG. 7 is a first diagram illustrating an example of a processing flow of the data analysis device according to the embodiment of the present invention.

A process of acquiring internal log data in a binary format and converting the acquired internal log data into text data in the data analysis device 30 will be described with reference to FIG. 7.

It is premised that the internal log data is recorded in an SD memory card and the SD memory card is mounted on the data analysis device 30.

First, the log data acquisition unit 32 acquires the internal log data, having time information attached thereto, which is written in the SD memory card by reading out one line of the internal log data at a time on the basis of a maintenance worker's operation of giving instruction of converting the internal log data (step S20). Next, the log data acquisition unit 32 outputs the acquired internal log data to the data conversion unit 33.

Next, the data conversion unit 33 converts the acquired internal log data from binary data to text data (step S21). A conversion method is as illustrated in FIG. 3. For example, regarding outside air temperature data of the first to second bytes of the internal log data, the data conversion unit 33 converts a binary number into a decimal number and then divides the converted number by 0.05 to thereby perform conversion into a physical quantity indicating an outside air temperature. In a case of the number of motor revolutions of the third byte, the data conversion unit 33 converts a binary number into a decimal number and multiplies the converted number by 20 to thereby perform conversion into a physical quantity indicating the number of motor revolutions. In a case of pressure of the fourth to fifth bytes, the data conversion unit 33 converts a binary number into a decimal number to thereby perform conversion into a physical quantity indicating pressure.

Next, the data conversion unit 33 writes the converted text data in the storage unit 34 (step S22). Next, the log data acquisition unit 32 determines whether or not the next internal log data is present (step S23). In a case where the next internal log data is present (step S23; Yes), the processes from step S20 are repeated. In a case where the next internal log data is not present (step S23; No), this processing flow is terminated.

Thereby, the maintenance worker converts the internal log data in a binary format which is stored in the data collection device 20 into text data to thereby confirm details of the internal log data.

In the above description, a case where internal log data stored in the data collection device 20 is acquired by mounting an SD memory card has been described as an example. However, the data collection device 20 and the data analysis device 30 may be connected to each other through communication means such as a LAN, and internal log data stored in the data collection device 20 may be transmitted to the data analysis device 30 and may be written in the storage unit 34.

FIG. 8 is a second diagram illustrating an example of a processing flow of the data analysis device according to the embodiment of the present invention.

A process of converting a condition value included in output conditions into a binary format and outputting the converted value to the data collection device 20 in the data analysis device 30 will be described with reference to FIG. 8.

It is premised that the data analysis device 30 and the data collection device 20 are communicably connected to each other.

First, a maintenance worker sets output conditions. Then, the setting reception unit 31 receives an input of the set output conditions (step S30) and outputs the received output conditions to the data conversion unit 33. The output conditions include information of a parameter to be monitored, a condition value, and a determination method. At this time, the condition value which is output to the data conversion unit 33 is text data. Next, the data conversion unit 33 converts the acquired condition value into binary data (step S31). For example, in a case where data conversion unit 33 acquires a condition value for an outside air temperature, the data conversion unit 33 converts a value obtained by multiplying the acquired value by 0.05 into a binary number. In a case where a condition value for the number of motor revolutions is acquired, the data conversion unit 33 converts a value obtained by dividing the acquired value by 20 into a binary number. In a case where a condition value for pressure is acquired, the data conversion unit 33 converts the acquired value into a binary number. The data conversion unit 33 outputs a new output condition including the converted binary data to the data collection device 20 through communication means such as a LAN (step S32). In the data collection device 20, the output condition setting unit 25 acquires a new output condition and updates the output condition stored in the storage unit 24 (memory) to the acquired new output condition.

Thereby, it is possible to set the condition value as binary data so as not to increase the processing cost of the output determination process performed by the data collection device 20. Output conditions desired to be detected by the maintenance worker can be set in the data collection device 20.

According to the data collection device 20 of this embodiment, the determination of an abnormality is performed on internal log data in a binary format to be output of the air conditioner 10 without converting the data into text data, and thus it is possible to detect an abnormality inside the air conditioner in real time.

According to a data collection system configured to include the data collection device 20 and the data analysis device 30, it is possible to set any output conditions and to analyze internal log data.

A process of each processing in the data collection device 20 and the data analysis device 30 described above is stored in the form of a program in a computer-readable recording medium, and the program is executed by being read out by computers of the data collection device 20 and the data analysis device 30, whereby the above-described processing is performed. Here, the computer-readable recording medium refers to a magnetic disk, a magneto-optical disk, a CD-ROM, a DVD-ROM, a semiconductor memory, or the like. This computer program is delivered to the computer through a communication line, and the computer having received the program executes the program.

The program may be a program for realizing a portion of the above-described functions. Further, the program may be a so-called difference file (difference program) which is capable of realizing the above-described functions in combination with a program stored in a computer system in advance. The data collection device 20 and the data analysis device 30 may be constituted by one computer, or may be constituted by a plurality of computers that are communicably connected to each other.

In addition, the components in the above-described embodiment can be appropriately replaced with well-known components without departing from the scope of the present invention as defined by the claims. The technical scope of the invention is not limited to the above-described embodiment, and various modifications can be made without departing from the scope of the present invention as defined by the claims.

### Industrial Applicability

According to the above-described data collection device, data collection system, control method, and program, it is possible to detect an abnormality inside an air conditioner in real time.

### Reference Signs List

10: AIR CONDITIONER
11: EXTERNAL INTERFACE
12: CONTROLLER
20: DATA COLLECTION DEVICE
21: DATA RECEPTION UNIT
22: OUTPUT DETERMINATION UNIT
23: EXTERNAL OUTPUT UNIT
24: STORAGE UNIT
25: OUTPUT CONDITION SETTING UNIT
30: DATAANALYSIS DEVICE
31: SETTING RECEPTION UNIT
32: LOG DATA ACQUISITION UNIT
33: DATA CONVERSION UNIT
34: STORAGE UNIT

## Claims

1. A data collection device (20) comprising:
a data reception unit (21) that is connected to an air conditioner (10) and acquires internal log data in a binary format from a controller (12) of the air conditioner (10);
an output determination unit (22) configured to generate an output condition of a parameter to be monitored on the basis of a table in which the parameter, one or a plurality of threshold values which are set in a binary format in advance, and a determination method are stored in association with each other to thereby determine whether or not the acquired internal log data satisfies the output condition; and
an external output unit (23) that outputs a notification signal indicating that an abnormality has been detected in a case where the output determination unit (22) determines that the output condition is satisfied.

2. The data collection device according to claim 1,
wherein the output determination unit (22) extracts data corresponding to a parameter to be monitored from the internal log data acquired by the data reception unit (21), on the basis of a correspondence relationship between a data position in the internal log data which is determined in advance and a kind of parameter allocated to data at the position, and determines the extracted data according to the output condition based on the threshold value and the determination method corresponding to the parameter stored in the table.

3. A data collection system comprising:
the data collection device (20) according to claim 1 or 2; and
a data analysis device (30) that is detachably connected to the data collection device (20),
wherein the data collection device (20) further includes a storage unit (24) that stores the internal log data acquired by the data reception unit (21), and
wherein the data analysis device (30) includes
a log data acquisition unit (32) that acquires the internal log data written in the storage unit (24) of the data collection device (20), and
a conversion unit (33) that converts the internal log data acquired by the log data acquisition unit (32) into text data.

4. The data collection system according to claim 3,
wherein the data analysis device (30) further includes
a setting reception unit (31) that receives an input of the output condition, and
a data conversion unit (33) that converts a condition value included in the output condition into a binary format, and outputs the output condition to the data collection device (20), and
wherein the data collection device (20) further includes an output condition setting unit (25) that acquires the output condition which is output by the data conversion unit (33) and writes the acquired output condition in the storage unit (24).

5. A control method comprising:
causing a data collection device (20) connected to an air conditioner (10) to acquire internal log data in a binary format from a controller (12) of the air conditioner (10), to generate an output condition of a parameter to be monitored on the basis of a table in which the parameter, one or a plurality of threshold values which are set in a binary format in advance, and a determination method are stored in association with each other to thereby determine whether or not the acquired internal log data satisfies the output condition, and to output a notification signal indicating that an abnormality has been detected in a case where it is determined that the output condition is satisfied.

6. A program causing a computer of a data collection device (20) to function as:
means, which is connected to an air conditioner (10), for acquiring internal log data in a binary format from a controller (12) of the air conditioner (10);
means for generating an output condition of a parameter to be monitored on the basis of a table in which the parameter, one or a plurality of threshold values which are set in a binary format in advance, and a determination method are stored in association with each other to thereby determine whether or not the acquired internal log data satisfies the output condition; and
means for outputting a notification signal indicating that an abnormality has been detected in a case where the output condition is satisfied.

## Patentansprüche

1. Datenerfassungsvorrichtung (20), umfassend:
eine Datenempfangseinheit (21), die mit einer Klimaanlage (10) verbunden ist und interne Protokolldaten in einem Binärformat von einer Steuerung (12) der Klimaanlage (10) erfasst;
eine Ausgabebestimmungseinheit (22), die konfiguriert ist für Erzeugen einer Ausgabebedingung eines zu überwachenden Parameters, auf Basis einer Tabelle, in der der Parameter, einer oder mehrere in einem Binärformat im Voraus gespeicherte Schwellenwerte und ein Bestimmungsverfahren in Verbindung miteinander gespeichert sind, um dadurch zu Bestimmen, ob die erfassten internen Protokolldaten die Ausgabebedingung erfüllen oder nicht; und
eine externe Ausgabeeinheit (23) zum Ausgeben eines Benachrichtigungssignals, das angibt, dass eine Anomalie in einem Fall erfasst worden ist, in dem die Ausgabebestimmungseinheit (22) bestimmt, dass die Ausgabebedingung erfüllt ist.

2. Datenerfassungsvorrichtung nach Anspruch 1,
wobei die Ausgabebestimmungseinheit (22) einem zu überwachenden Parameter entsprechende Daten aus den von der Datenempfangseinheit (21) erfassten internen Protokolldaten, auf Basis einer Korrespondenzbeziehung zwischen einer Datenposition in den im Voraus bestimmten internen Protokolldaten und einer Art von Parametern, die den Daten an der Position zugewiesen werden, extrahiert, und die extrahierten Daten gemäß der Ausgabebedingung auf Basis des Schwellenwerts und dem Bestimmungsverfahren entsprechend dem in der Tabelle gespeicherten Parameter bestimmt.

3. Datenerfassungssystem, umfassend:
die Datenerfassungsvorrichtung (20) nach Anspruch 1 oder 2; und
eine Datenanalysevorrichtung (30), die abnehmbar mit der Datenerfassungsvorrichtung (20) verbunden ist,
wobei die Datenerfassungsvorrichtung (20) ferner eine Speichereinheit (24) umfasst, die die von der Datenempfangseinheit (21) erfassten internen Protokolldaten speichert, und
wobei die Datenanalysevorrichtung (30) Folgendes umfasst:
eine Protokolldatenerfassungseinheit (32), die die in der Speichereinheit (24) der Datenerfassungsvorrichtung (20) gespeicherten internen Protokolldaten erfasst, und
eine Umwandlungseinheit (33), die die von der Protokolldatenerfassungseinheit (32) erfassten internen Protokolldaten in Textdaten umwandelt.

4. Datenerfassungssystem nach Anspruch 3,
wobei die Datenanalysevorrichtung (30) ferner Folgendes umfasst:
eine Einstellungsempfangseinheit (31), die eine Eingabe der Ausgabebedingung empfängt, und
eine Datenumwandlungseinheit (33), die einen in der Ausgabebedingung enthaltenen Bedingungswert in ein Binärformat umwandelt, und die die Ausgabebedingung an die Datenerfassungsvorrichtung (20) ausgibt, und
wobei die Datenerfassungsvorrichtung (20) ferner eine Ausgabebedingungseinstelleinheit (25) umfasst, die die Ausgabebedingung erfasst, die von der Datenumwandlungseinheit (33) ausgegeben wird, und die erfasste Ausgabebedingung in der Speichereinheit (24) speichert.

5. Steuerverfahren, umfassend:
Veranlassen einer mit einer Klimaanlage (10) verbundenen Datenerfassungsvorrichtung (20) zum Erfassen interner Protokolldaten in einem Binärformat von einer Steuerung (12) der Klimaanlage (10), zum Erzeugen einer Ausgabebedingung eines zu überwachenden Parameters, auf Basis einer Tabelle, in der der Parameter, einer oder mehrere in einem Binärformat im Voraus gespeicherte Schwellenwerte und ein Bestimmungsverfahren in Verbindung miteinander gespeichert sind, um dadurch zu bestimmen, ob die erfassten internen Protokolldaten die Ausgabebedingung erfüllen oder nicht, und zum Ausgeben eines Benachrichtigungssignals, das angibt, dass eine Anomalie in einem Fall erfasst worden ist, in dem bestimmt ist, dass die Ausgabebedingung erfüllt ist.

6. Programm, das bei einem Computer einer Datenerfassungsvorrichtung (20) folgende Funktionen bewirkt:
als eine Einrichtung, die mit einer Klimaanlage (10) verbunden ist, um interne Protokolldaten in einem Binärformat von einer Steuerung (12) der Klimaanlage (10) zu erfassen;
als eine Einrichtung zum Erzeugen einer Ausgabebedingung eines zu überwachenden Parameters, auf Basis einer Tabelle, in der der Parameter, einer oder mehrere in einem Binärformat im Voraus gespeicherte Schwellenwerte und ein Bestimmungsverfahren in Verbindung miteinander gespeichert sind, um dadurch zu Bestimmen, ob die erfassten internen Protokolldaten die Ausgabebedingung erfüllen oder nicht; und
als eine Einrichtung zum Ausgeben eines Benachrichtigungssignals, das angibt, dass eine Anomalie in einem Fall erfasst worden ist, in dem die Ausgabebedingung erfüllt ist.

## Revendications

1. Dispositif de collecte de données (20) comprenant :
une unité de réception de données (21) qui est connectée à un climatiseur (10) et qui acquiert des données d'enregistrement interne dans un format binaire auprès d'un contrôleur (12) du climatiseur (10) ;
une unité de détermination de sortie (22) configurée pour générer une condition de sortie d'un paramètre à surveiller sur la base d'une table dans laquelle le paramètre, une ou une pluralité de valeurs de seuil qui sont établies dans un format binaire à l'avance, et un procédé de détermination sont mémorisés en association les uns avec les autres pour ainsi déterminer si, oui ou non, les données d'enregistrement interne acquises satisfont à la condition de sortie ; et
une unité de sortie externe (23) qui délivre un signal de notification indiquant qu'une anomalie a été détectée dans un cas dans lequel l'unité de détermination de sortie (22) détermine que la condition de sortie est satisfaite.

2. Dispositif de collecte de données selon la revendication 1,
dans lequel l'unité de détermination de sortie (22) extrait des données correspondant à un paramètre à surveiller des données d'enregistrement interne acquises par l'unité de réception de données (21), sur la base d'une relation de correspondance entre une position de données dans les données d'enregistrement interne qui est déterminée à l'avance et un type de paramètre attribué aux données à la position, et détermine les données extraites conformément à la condition de sortie sur la base de la valeur de seuil et du procédé de détermination correspondant au paramètre mémorisé dans la table.

3. Système de collecte de données comprenant :
le dispositif de collecte de données (20) selon la revendication 1 ou 2 ; et
un dispositif d'analyse de données (30) qui est connecté de manière détachable au dispositif de collecte de données (20),
dans lequel le dispositif de collecte de données (20) comprend en outre une unité de mémorisation (24) qui mémorise les données d'enregistrement interne acquises par l'unité de réception de données (21), et
dans lequel le dispositif d'analyse de données (30) comprend
une unité d'acquisition de données d'enregistrement (32) qui acquiert les données d'enregistrement interne écrites dans l'unité de mémorisation (24) du dispositif de collecte de données (20), et
une unité de conversion (33) qui convertit les données d'enregistrement interne acquises par l'unité d'acquisition de données d'enregistrement (32) en données de texte.

4. Système de collecte de données selon la revendication 3,
dans lequel le dispositif d'analyse de données (30) comprend en outre
une unité de réception de configuration (31) qui reçoit une entrée de la condition de sortie, et
une unité de conversion de données (33) qui convertit une valeur de condition incluse dans la condition de sortie en un format binaire, et qui délivre la condition de sortie au dispositif de collecte de données (20), et
dans lequel le dispositif de collecte de données (20) comprend en outre une unité d'établissement de condition de sortie (25) qui acquiert la condition de sortie qui est délivrée par l'unité de conversion de données (33) et qui écrit la condition de sortie acquise dans l'unité de mémorisation (24).

5. Procédé de commande comprenant :
la commande d'un dispositif de collecte de données (20) connecté à un climatiseur (10) pour qu'il acquiert des données d'enregistrement interne dans un format binaire auprès d'un contrôleur (12) du climatiseur (10), pour qu'il génère une condition de sortie d'un paramètre à surveiller sur la base d'une table dans laquelle le paramètre, une ou une pluralité de valeurs de seuil qui ont été établies dans un format binaire à l'avance, et un procédé de détermination sont mémorisés en association les uns avec les autres pour ainsi déterminer si, oui ou non, les données d'enregistrement interne acquises satisfont à la condition de sortie, et pour qu'il délivre un signal de notification indiquant qu'une anomalie a été détectée dans un cas dans lequel il est déterminé que la condition de sortie est satisfaite.

6. Programme amenant un ordinateur d'un dispositif de collecte de données (20) à fonctionner en tant que :
moyen, qui est connecté à un climatiseur (10), pour acquérir des données d'enregistrement interne dans un format binaire auprès d'un contrôleur (12) du climatiseur (10) ;
moyen pour générer une condition de sortie d'un paramètre à surveiller sur la base d'une table dans laquelle le paramètre, une ou une pluralité de valeurs de seuil qui sont établies dans un format binaire à l'avance, et un procédé de détermination sont mémorisés en association les uns avec les autres pour ainsi déterminer si, oui ou non, les données d'enregistrement interne acquises satisfont à la condition de sortie ; et
moyen pour délivrer un signal de notification indiquant qu'une anomalie a été détectée dans un cas dans lequel la condition de sortie est satisfaite.
